## Europäisches Patentamt
## European Patent Office
## Office européen des brevets

(19)

(11) Numéro de publication: **0 013 975**
**B1**

(12)

# FASCICULE DE BREVET EUROPEEN

(45) Date de publication du fascicule du brevet:
**20.10.82**

(21) Numéro de dépôt: **80100330.2**

(22) Date de dépôt: **23.01.80**

(51) Int. Cl.³: **B 01 J 8/44,** B 65 G 53/22 //
C23D5/04, B65D88/72,
F26B25/10

(54) **Installation de fluidisation.**

(30) Priorité: **25.01.79 FR 7901969**

(43) Date de publication de la demande:
**06.08.80 Bulletin 80/16**

(45) Mention de la délivrance du brevet:
**20.10.82 Bulletin 82/42**

(84) Etats contractants désignés:
**BE CH DE FR GB IT LU NL**

(56) Documents cités:
**DE-A-2 745 165**
**FR-A-1 441 688**
**FR-A-1 527 232**
**FR-A-2 211 284**
**FR-A-2 288 696**
**GB-A-1 265 004**
**GB-A-2 020 406**
**GB-B-671 667**
**US-A-2 167 416**

(73) Titulaire: **COMPAGNIE EUROPEENNE POUR
L'EQUIPEMENT MENAGER "CEPEM" Société anonyme
dite:, 12, rue de la Baume, F-75008 Paris (FR)**

(72) Inventeur: **Gernez, Alain, c/o 7, rue des Remparts,
F-57230 Bitche (FR)**

(74) Mandataire: **Weinmiller, Jürgen et al, Zeppelinstrasse 63,
D-8000 München 80 (DE)**

ACTORUM AG

## Installation de fluidisation

L'invention concerne une installation de fluidisation pour produits à fluidiser tels que poudre, grains ou analogue.

La fluidisation est un principe connu, par exemple à partir des documents FR-A No 2288696, US-A No 2167416 et GB-A No 671667. Elle a pour but de rendre le comportement d'un produit en poudre, en grains ou analogue voisin de celui d'un fluide. La fluidisation consiste à introduire, à faible vitesse, un flux de gaz dans les particules du produit; les courants des gaz entraînent les particules dans un mouvement ascensionnel contrecarré par la pesanteur, qui donne au mélange particules/air le comportement d'un fluide. Ces courants de gaz sont généralement obtenus en faisant traverser une plaque porteuse par le gaz de fluidisation. Les éléments de fluidisation sont habituellement rigides et forment le fond des bacs à fluidiser, ou sont fixés très fortement sur ces fonds. De plus, la conception actuelle des fonds fluidisés fait que les éléments sont peu démontables ou nécessitent un travail important pour le changement de la plaque poreuse par exemple.

Le but de l'invention est de simplifier la conception des fonds de fluidisation afin de permettre de les changer rapidement dans le cas de détérioration d'un de leurs éléments. Un autre but de l'invention est de provoquer un brassage du produit fluidisé en créant des zones de fluidisation différentes.

Un but de l'invention est de réaliser un élément de fluisisation simplement posé sur une paroi ou un fond étanche d'une enceinte.

L'invention a pour objet une installation de fluidisation dans une enceinte contenant le produit à fluidiser avec une plaque poreuse dont la surface inférieure est alimentée par un gaz sous pression, caractérisée par le fait que cette plaque constitue, avec une plaque étanche et un joint périphérique intermédiaire, un élément de fluidisation qui est posé sur l'une des parois étanches de l'enceinte.

Les caractéristiques et avantages de l'invention ressortiront de la description ci-après de formes de réalisation données à titre d'exemple, en référence aux dessins annexés dans lesquels:

— la fig. 1 est une vue en coupe d'une enceinte de fluidisation selon l'invention,

— la fig. 2 est une vue en perspective d'un bord d'un élément de fluidisation montrant une pince de fixation,

— la fig. 3 est une vue en coupe d'un élément de fluidisation,

— la fig. 4 est une vue en coupe d'une variante d'un élément de fluidisation,

— les fig. 5 et 6 montrent respectivement, par une vue en perspective et une vue en coupe, la possibilité de traverser un élément de fluidisation,

— la fig. 7 montre par une vue en perspective un élément de fluidisation constitué par la juxtaposition de plusieurs éléments, et

— les fig. 8, 9 et 10 représentent schématiquement des éléments de fluidisation créant un brassage du produit à fluidiser par des zones de fluidisation différentes.

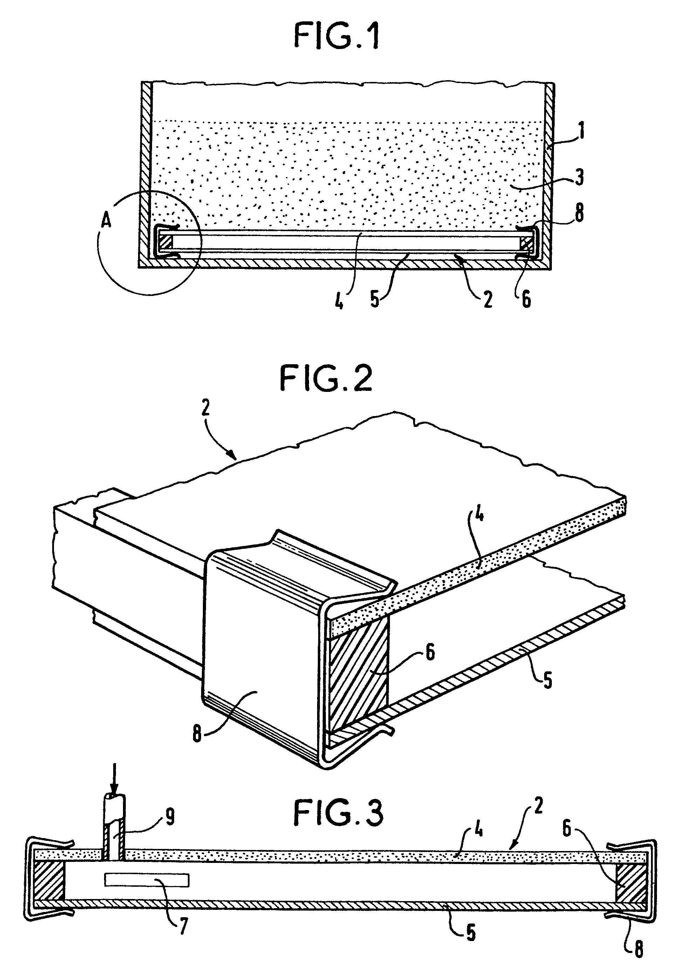

Dans la forme de réalisation représentée sur les fig. 1 à 3, l'enceinte de fluidisation est constituée par une enceinte 1, dans le fond étanche de laquelle est posé un élément de fluidisation 2 en contact avec le produit à fluidiser 3. L'enceinte 1 pourrait être une conduite pour le transport du produit à fluidiser.

L'élément de fluidisation comporte une plaque poreuse 4 et une plaque étanche de fond 5, séparées par un joint 6 disposé à la périphérie, par exemple un joint en caoutchouc; un système de fixation par pinces 8 maintient le tout en place. Dans l'espace ménagé entre la plaque poreuse 4 et la plaque de fond 5, on peut placer un système de conditionnement 7 de l'air de fluidisation.

Le système de fixation peut être de la colle, des vis, des pinces. Il est avantageux d'utiliser des pinces 8 permettant le remplacement rapide d'un élément en cas de détérioration de celui-ci. Il est possible d'employer des profilés, par exemple en aluminium ou en caoutchouc, faisant à la fois office de pince et de joint.

L'alimentation en gaz de l'élément de fluidisation peut se faire par le dessous, par le côté ou par le dessus, à travers l'élément poreux. Il est avantageux de réaliser cette alimentation à travers la plaque poreuse, soit par une conduite 9 traversant la plaque poreuse, soit en soufflant par une conduite s'appuyant sur la plaque poreuse ou arrivant à proximité: cela permet la pose simple d'un élément de fluidisation sur une surface du bac à fluidiser.

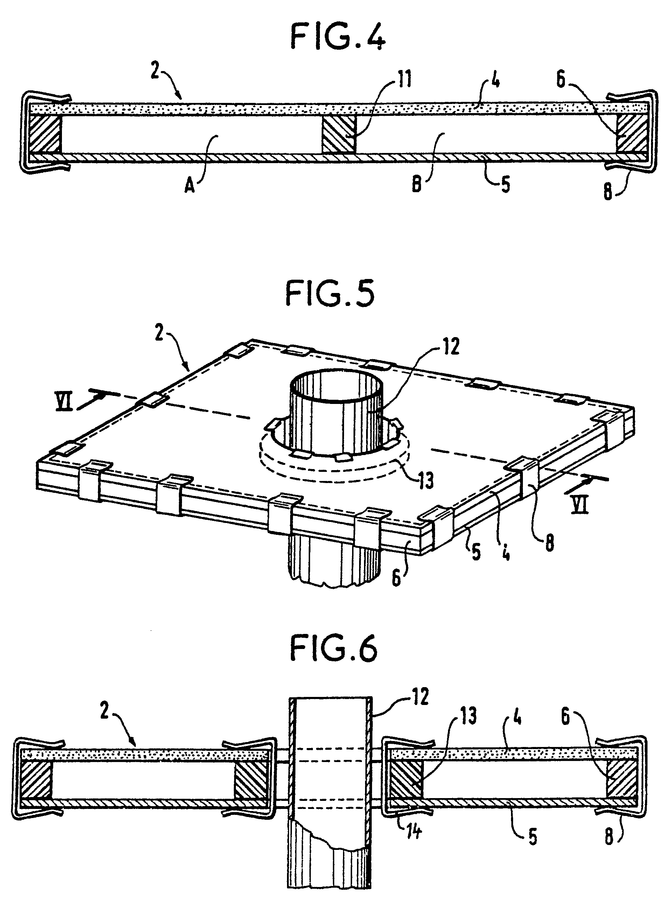

Dans la forme de réalisation représentée sur la fig. 4, l'élément de fluidisation comporte un joint intérieur 11 permettant de créer deux zones de fluidisation A et B avec le même élément de fluidisation.

Il est possible de traverser un élément de fluidisation, comme représenté sur les fig. 5 et 6, au moyen d'un tuyau 12 traversant l'élément fluidisant 2. La plaque poreuse 4 et la plaque de fond 5 sont percées d'un trou pour le passage du tuyau 12, et un joint en couronne 13 est intercalé entre la plaque poreuse 4 et la plaque de fond 5, autour du tuyau 12. Des pinces intérieures 14 en combinaison avec les pinces extérieures 8 assurent le maintien des éléments.

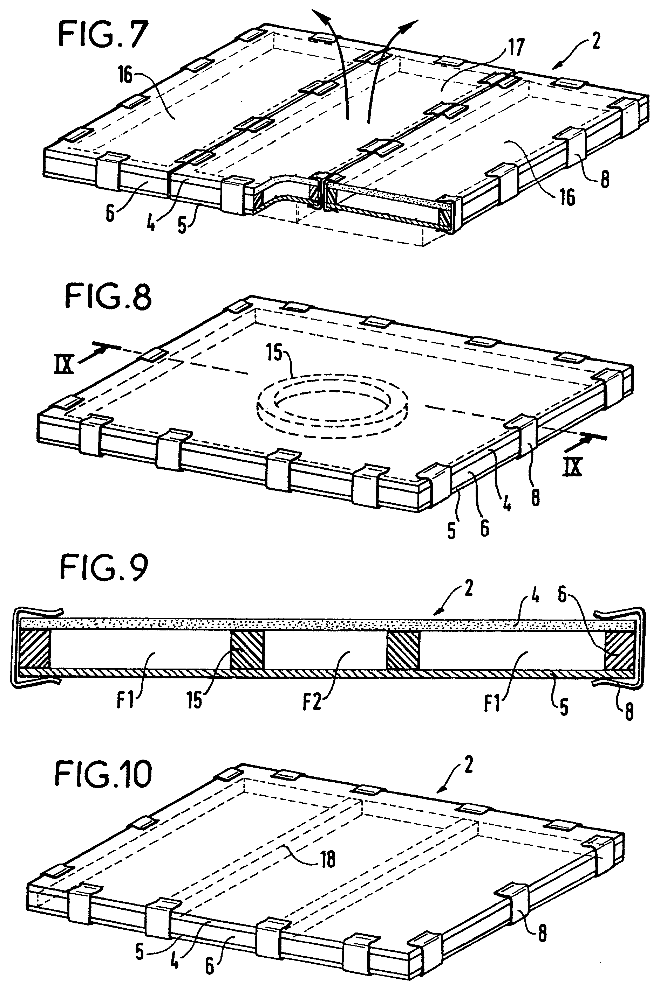

Les fig. 7 à 10 représentent des exemples de brassage de l'élément fluidisant en provoquant des zones de fluidisation différentes $F_1$ et $F_2$. Ces zones peuvent être obtenues par un élément de fluidisation avec au moins un joint interne 15 (fig. 9), en utilisant des pressions différentes dans les zones $F_1$ et $F_2$ ou par juxtaposition d'éléments de fluidisation comportant des éléments poreux 16, 17 de fluidisation de caractéristiques différentes comme représenté fig. 7. Sur la fig. 8, le joint interne 15 est annulaire et crée une zone interne circulaire de pression différente. Sur la fig. 10, on utilise deux joints droits 18 créant trois zones de fluidisation différente.

L'installation suivant l'invention présente les avantages suivants. L'élément de fluidisation est facilement démontable et chaque élément facilement remplaçable. Il est possible de mettre des joints internes dans l'élément de fluidisation et de permettre le passage de conduite à travers la surface fluidisante. La simplicité de réalisation d'un élément de fluidisation permet de les fabriquer rapidement. Il est possible d'alimenter en gaz les éléments de fluidisation à travers la plaque fluidisée, ce qui autorise la pose des éléments sur des surfaces simples. Dans le cas où le réservoir de poudre est sous pression, sa résistance n'est réalisée que par ses parois, de telle sorte que les éléments de fluidisation ne supportent pas de charges mécaniques importantes.

En réalisant des zones de fluidisation différentes, il est possible de créer un brassage de l'élément fluidisé.

L'invention est applicable de préférence dans les installations de poudrage électrostatique, par exemple pour l'émaillage par poudrage, telles que décrites dans le FR-A No 2442080 de la titulaire.

L'invention est également applicable dans les silos de grains pour le séchage, la conservation des grains tels que grains de blé, maïs, et la conservation de réservoirs de poudre en général.

L'invention est encore applicable pour le transport de poudre ou de grains dans des conduites tubulaires cylindriques ou à section carrée ou autre.

## Revendications

1. Installation de fluidisation dans une enceinte (1) contenant le produit (3) à fluidiser avec une plaque poreuse (4) dont la surface inférieure est alimentée par un gaz sous pression, caractérisée par le fait que cette plaque (4) constitue, avec une plaque étanche (5) et un joint périphérique intermédiaire (6), un élément de fluidisation (2) qui est posé sur l'une des parois étanches de l'enceinte.

2. Installation selon la revendication 1, caractérisée en ce que l'enceinte (1) est une conduite tubulaire destinée au transport du produit fluidisé (3) tel que poudre, grains ou analogue.

3. Installation selon la revendication 1, caractérisée en ce que les éléments constitutifs (4, 5) de l'élément de fluidisation (2) sont maintenus entre eux par des pinces (8).

4. Installation selon la revendication 3, caractérisée en ce que le joint (6, 13) est constitué par un profilé faisant à la fois office de pince et de joint.

5. Installation selon l'une des revendications 1 à 4, caractérisée en ce que l'élément de fluidisation (2) comporte au moins un joint intermédiaire interne (11).

6. Installation selon l'une des revendications 1 à 5, caractérisée en ce que l'élément de fluidisation (2) est constitué par la juxtaposition de plusieurs éléments.

7. Installation selon la revendication 6, caractérisée en ce que les éléments de fluidisation (2) comportent des éléments poreux (4) de caractéristiques différentes.

8. Installation selon l'une des revendication 1 à 7, caractérisée en ce que l'élément de fluidisation (2) est alimenté en gaz au travers de l'élément poreux (4).

9. Installation selon la revendication 5, caractérisée en ce que l'élément de fluidisation (2) comporte au moins un joint annulaire (15) ou deux joints intermédiaires (18) internes créant une zone centrale et que la pression de gaz appliquée sur l'élément de fluidisation est différente dans la zone centrale et à l'extérieur de cette zone centrale.

## Ansprüche

1. Fluidisationsanlage in einem Behälter (1), der das zu fluidisierende Produkt (3) enthält, mit einer porösen Platte (4), deren untere Oberfläche mit einem unter Druck stehenden Gas versorgt wird, dadurch gekennzeichnet, dass diese Platte (4) mit einer dichten Platte (5) und einer Ringzwischendichtung (6) ein Fluidisierelement (2) bildet, das auf einer der dichten Wände des Behälters ausgesetzt ist.

2. Anlage nach Anspruch 1, dadurch gekennzeichnet, dass der Behälter (1) eine rohrförmige Leitung ist, die zum Transport des fluidisierten Produkts (3) wie Puder, Körner oder ähnliches bestimmt ist.

3. Anlage nach Anspruch 1, dadurch gekennzeichnet, dass die das Fluidisierelement (2) bildenden Elemente (4, 5) untereinander durch Klammern (8) gehalten werden.

4. Anlage nach Anspruch 3, dadurch gekennzeichnet, dass die Dichtung (6, 13) aus einem Profilelement besteht, das gleichzeitig als Klammer und als Dichtung dient.

5. Anlage nach einem der Ansprüche 1 bis 4, dadurch gekennzeichnet, dass das Fluidisierelement (2) mindestens eine innere Zwischendichtung (11) aufweist.

6. Anlage nach einem der Ansprüche 1 bis 5, dadurch gekennzeichnet, dass das Fluidisierelement (2) durch die Übereinanderstapelung mehrerer Elemente gebildet wird.

7. Anlage nach Anspruch 6, dadurch gekennzeichnet, dass die Fluidisierelemente (2) poröse Elemente (4) unterschiedlicher Charakteristika aufweisen.

8. Anlage nach einem der Ansprüche 1 bis 7, dadurch gekennzeichnet, dass das Fluidisierelement (2) durch das poröse Element (4) hindurch mit Gas versorgt wird.

9. Anlage nach Anspruch 5, dadurch gekennzeichnet, dass das Fluidisierelement (2) mindestens eine Ringdichtung (15) oder zwei innere Zwischendichtungen (18) aufweist, die einen zentralen Bereich bilden, und dass der auf das Fluidisierelement ausgeübte Gasdruck in dem zentralen Bereich und ausserhalb des zentralen Bereichs unterschiedlich ist.

## Claims

1. A fluidisation unit in a chamber (1) containing the product (3) to be fluidised with a porous sheet (4) the lower surface of which is fed by a gas under pressure, characterized in that this sheet (4) constitutes with a gas-tight plate (5) and a peripheral intermediate seal (6) a fluidisation element (2) which is placed on one of the gas-tight walls of the chamber.

2. A fluidisation unit according to claim 1, characterized in that the chamber (1) is a tubular duct for conveying a granular, powdery or like substance (3) when fluidised.

3. A fluidisation unit according to claim 1, characterized in that the constituants (4, 5) of the fluidisation element (2) are held together by clips (8).

4. A fluidisation unit according to claim 3, characterized in that the seal (6, 13) is constituted by a member of a profile section serving both as a clip and as a seal.

5. A fluidisation unit according to one of the claims 1 to 4, characterized in that the fluidisation element (2) includes at least one internal intermediate seal (11).

6. A fluidisation unit according to one of the claims 1 to 5, characterized in that the fluidisation element (2) is constituted of several juxtaposed elements.

7. A fluidisation unit according to claim 6, characterized in that the fluidisation elements (2) have porous elements (4) exhibiting different characteristics.

8. A fluidisation unit according to one of the claims 1 to 7, characterized in that gas is supplied to the fluidisation element (2) through the porous element (6).

9. A fluidisation unit according to claim 5, characterized in that the fluidisation element (2) comprises at least one annular (15) or two internal intermediate seals (18) defining a central zone, and that the pressure of the gas applied on the fluidisation element is different in the central zone and outside of this central zone.

0 013 975

# FIG.1

# FIG.2

# FIG.3

# FIG.4

# FIG.5

# FIG.6

**FIG.7**

**FIG.8**

**FIG.9**

**FIG.10**